# NEUE EUROPÄISCHE PATENTSCHRIFT

(11) **EP 3 957 884 B2**
(45) Veröffentlichungstag und Bekanntmachung des Hinweises auf die Entscheidung über den Einspruch: **18.11.2026**
(45) Hinweis auf die Patenterteilung: 10.04.2024
(21) Anmeldenummer: 21192204.2
(22) Anmeldetag: 19.08.2021
(51) Int. Cl.: F16K 7/12, F16K 37/00, G01M 3/18, G01L 9/12

(54) **MEMBRANVENTIL UND VERFAHREN**
DIAPHRAGM VALVE AND METHOD
SOUPAPE À MEMBRANE ET PROCÉDÉ

(30) Priorität: 21.08.2020 DE 102020121968
(43) Veröffentlichungstag der Anmeldung: 23.02.2022
(73) Patentinhaber: GEMÜ Gebr. Müller Apparatebau GmbH & Co. Kommanditgesellschaft, 74653 Ingelfingen (DE)
(72) Erfinder: Klemt, Michael, 74629 Pfedelbach (DE)
(74) Vertreter: DREISS Patentanwälte PartG mbB

(56) Entgegenhaltungen:
- WO-A2-2012/035291
- DE-A1- 102015 210 208
- DE-A1- 102018 213 002
- US-A1- 2018 224 346

## Beschreibung

Die Erfindung betrifft ein Membranventil und ein Verfahren.

WO 2012/035291 A2 offenbart ein Sensorsystem zum Erkennen von Leckagen in einer Membran, wobei das System mindestens ein Sensorelement umfasst, wobei das Element eine aus einem elektrisch leitfähigen Polymer gebildete Flüssigkeitserfassungskomponente und eine Erfassungsschaltung zum Messen des elektrischen Widerstands des elektrisch leitfähigen Polymers umfasst.

Gemäß US 2018/224346 A1 werden eine Sensorfolie und ein kapazitiver Sensor bereitgestellt, bei denen der Anteil eines toten Bereichs am gesamten Sensorkörper gering ist.

DE 10 2015 210 208 A1 offenbart ein Verfahren zum Ermitteln einer Zustandsgröße einer Ventilmembran eines motorisch angetriebenen Membranventils und umfasst folgende Schritte: a) In einem ersten Zeitbereich: Bewegen der Ventilmembran so, dass das Membranventil aus einem ersten Zustand in einen zweiten Zustand übergeht; dabei b) Erfassen mindestens eines Referenzwerts einer mit dem Bewegungsvorgang der Ventilmembran zusammenhängenden Größe; c) In einem zweiten Zeitbereich: Bewegen der Ventilmembran so, dass das Membranventil aus dem ersten Zustand in den zweiten Zustand übergeht; dabei d) Erfassen mindestens eines Betriebswerts der mit dem Bewegungsvorgang der Ventilmembran zusammenhängenden Größe; e) Vergleichen des mindestens einen Referenzwerts mit dem mindestens einen Betriebswert oder von aus diesen gewonnenen Größen; und f) Ermitteln der Zustandsgröße aus dem Ergebnis des Vergleichs.

Aus dem weiteren Stand der Technik, beispielsweise DE 10 2018 213 002 A1, ist eine Anordnung bekannt, bei der mindestens ein Sensor innerhalb einer Membran eines Membranventils angeordnet ist. Dies ist in mehrfacher Hinsicht nachteilhaft, da beispielsweise die Sensorik gemeinsam mit der Membran getauscht werden muss. Die der Erfindung zugrundeliegenden Probleme werden durch ein Membranventil gemäß dem Anspruch 1 und ein Verfahren gemäß einem abhängigen Anspruch gelöst.

Die der Erfindung zugrundeliegenden Probleme werden durch eine Membranventil gemäß dem Anspruch 1 und ein Verfahren gemäß einem abhängigen Anspruch gelöst.

Ein erster Aspekt der Beschreibung betrifft eine Sensorlage zur Anordnung auf einer Trockenseite einer Membran eines Membranventils. Die Sensorlage umfasst eine Mehrzahl von Drucksensoren, welche zur Erzeugung eines jeweiligen Signals, welches eine lotrecht zum jeweils zugeordneten Abschnitt der Sensorlage wirkende Kraft charakterisiert, ausgebildet sind.

Durch die von den Drucksensoren erzeugten Signale kann ein Versagen der Membran im Vorfeld ermittelt also im Sinne von Predictive Maintenance vorhergesagt werden. Einem Versagen der Membran wird also vorgebeugt. Die Werkzeugkosten für die Sensorlage verringern sich, da die Sensorlage skalierbar ist. Im Falle eines Defekts der Membran kann diese ausgetauscht werden, wohingegen die Sensorlage mehrfach verwendbar ist.

Volumenänderungen der Membran im Dichtbereich können die Dichtung nach außen nachteilhaft beeinflussen, weshalb durch die Druckmessung im Dichtbereich eine mangelnde Abdichtung nach außen vorhergesagt werden kann. Ebenfalls können im inneren Bereich abrasive oder rissartige Beschädigungen sowie eine nachlassende Elastizität detektiert werden.

Für Anwender, die bisher einen frühzeitigen Membranwechsel bevorzugt haben, bietet die bereitgestellte Sensorlage den Vorteil, dass der Membranwechsel nur dann stattfinden muss, wenn ein Alterungsgrad oder eine Schädigung, was in Abhängigkeit von den Signalen ermittelt wird, den Wechsel indiziert.

Anwendungen im Pharmabereich profitieren davon, dass keine kritischen Komponenten in der Membran verbaut werden müssen. Vielmehr bietet die bereitgestellte Sensorlage den Vorteil, dass eine Entkopplung zwischen Funktion der Membran und Zustandsüberwachung der Membran erreicht wird.

Vorteilhaft können bestehende Membranventile nachgerüstet werden, indem die Sensorlage auf der Trockenseite der Membran angeordnet wird.

Mithin können Predictive Maintenance, eine Anzeige von Undichtigkeiten / Fehlfunktionen in der Anwendung und eine Montagehilfe realisiert werden.

Ein vorteilhaftes Beispiel zeichnet sich dadurch aus, dass eine Gruppe von Spannabschnitten eines Klemmbereichs der Sensorlage voneinander beabstandet angeordnet sind, wobei der jeweilige Spannabschnitt wenigstens einen der Mehrzahl von Drucksensoren umfasst.

Zum einen kann der Montageprozess so überwacht werden. Zum anderen wird die Klemmung überwacht. Eine mangelnde Dichtheit nach außen kann festgestellt oder vorhergesagt werden.

Ein vorteilhaftes Beispiel zeichnet sich dadurch aus, dass die Sensorlage in dem Klemmbereich eine Gruppe von äußeren Dichtabschnitten umfasst, wobei der jeweilige äußere Dichtabschnitt wenigstens einen der Mehrzahl von Drucksensoren umfasst.

Vorteilhaft kann die Dichtheit nach außen überwacht werden.

Ein vorteilhaftes Beispiel zeichnet sich dadurch aus, dass die Sensorlage in einem Stellbereich einen über einen Steg mit dem Klemmbereich verbundenen und wenigstens abschnittsweise um eine Durchgangsöffnung angeordneten Stellabschnitt umfasst, wobei der über den Steg verbundene Stellabschnitt wenigstens einen der Mehrzahl von Drucksensoren umfasst.

Der Stellabschnitt befindet sich nah an der Stellachse, womit dieser Abschnitt die vom Ventilantrieb aufgebracht Kraft repräsentiert.

Ein vorteilhaftes Beispiel zeichnet sich dadurch aus, dass die Sensorlage in dem Stellbereich wenigstens einen über einen Steg mit dem Klemmbereich verbundenen inneren Dichtabschnitt umfasst, wobei der innere Dichtabschnitt wenigstens einen der Mehrzahl von Drucksensoren umfasst.

Die Ermittlung der Kraft auf den jeweiligen Stellabschnitt indiziert einen Druck, der in einem Bereich von der Membran auf den Ventilsitz aufgebracht wird. Damit lässt sich beispielsweise eine Regelung der Anpresskraft über den Ventilantrieb realisieren.

Ein vorteilhaftes Beispiel zeichnet sich dadurch aus, dass der jeweilige Drucksensor von Schichten der Sensorlage umschlossen ist.

Der jeweilige Drucksensor liegt damit vor Umwelteinflüssen geschützt innerhalb der Sensorlage.

Ein vorteilhaftes Beispiel zeichnet sich dadurch aus, dass wenigstens einer der Mehrzahl von Drucksensoren insbesondere in einem Klemmbereich der Sensorlage zwei parallel zu einer Ebene der Sensorlage verlaufende Elektroden, welche durch ein Dielektrikum voneinander getrennt sind, umfasst.

Damit wird ein kapazitiver Sensor realisiert, der durch die Dickenänderung des Dielektrikums bei aufgebrachter Kraft Schlüsse auf die auf die Membran wirkenden Kräfte zulässt.

Ein vorteilhaftes Beispiel zeichnet sich dadurch aus, dass wenigstens einer der Mehrzahl von Drucksensoren insbesondere in einem Stellbereich der Sensorlage ein textiles Gewebe umfasst, wobei das textile Gewebe eine Mehrzahl von durch das textile Gewebe voneinander getrennten ersten Elektroden umfasst, und wobei das textile Gewebe wenigstens eine durch das Gewebe von den ersten Elektroden getrennte zweite Elektrode umfasst, und wobei die ersten Elektroden und die wenigstens eine zweite Elektrode sich mehrfach kreuzen.

Vorteilhaft kann durch das textile Gewebe eine schnelle Diagnose erfolgen. Da eine Kraftänderung schnell zu einer Änderung des erzeugten Signals führt.

Ein vorteilhaftes Beispiel zeichnet sich dadurch aus, dass ein Feuchtigkeitssensor zur Erzeugung eines Signals ein Feuchtigkeitssensor zur Erzeugung eines Signals, welches einen Kontakt einer Flüssigkeit mit der Sensorlage indiziert, wenigstens zwei elektrische Leiter, welche zumindest abschnittsweise benachbart zueinander an einer Oberfläche der Sensorlage verlaufen, umfasst.

Durch den vorgeschlagenen Feuchtigkeitssensor wird ein Eindringen von Prozessflüssigkeit in den Trockenbereich des Membranventils detektiert, indem ein Stromfluss zwischen den beiden elektrischen Leitern festgestellt wird.

Ein vorteilhaftes Beispiel zeichnet sich dadurch aus, dass die Sensorlage einen Temperatursensor zur Erzeugung eines Signals, welches eine Temperatur der Sensorlage charakterisiert, umfasst.

Durch die Aufzeichnung der Temperatur der Sensorlage kann beispielsweise ein Alterungsmodell der Membran einen

Zustand der Membran ermittelt und frühzeitig eine Warnung zum Tausch der Membran ausgeben.

Ein zweiter Aspekt der Beschreibung betrifft ein Membranventil umfassend die Sensorlage gemäß dem ersten Aspekt.

Erfindungsgemäß ist vorgesehen, dass ein bzw. der Klemmbereich der Sensorlage zumindest abschnittsweise zwischen einem Antriebskörper und einer Membran verklemmt ist, und wobei der bzw. ein Stellbereich der Sensorlage zumindest abschnittsweise zwischen einem Druckstück und der Membran angeordnet ist.

Ein dritter Aspekt der Beschreibung betrifft ein Verfahren zum Betreiben eines Membranventils. Das Verfahren umfasst: Empfangen einer Mehrzahl von Signalen ausgehend von Drucksensoren einer Sensorlage, wobei die Signale jeweils eine lotrecht auf einen zugeordneten Abschnitt) der Sensorlage wirkende Kraft charakterisieren; und Ermitteln eines Zustands einer Membran des Membranventils in Abhängigkeit von der Mehrzahl von Signalen.

Die Sensorlage ermöglicht also eine ständige Überwachung des Zustands der Membran, wenn diese verbaut und in Betrieb ist.

Ein vorteilhaftes Beispiel zeichnet sich dadurch aus, dass die Mehrzahl von Signalen wenigstens eine Gruppe von Signalen umfasst, welche von in jeweiligen Spannabschnitten der Sensorlage angeordneten Drucksensoren stammen, wobei der Zustand der Membran einen Klemmzustand der Membran mit lotrecht auf den jeweiligen Spannabschnitten wirkenden Kräften umfasst, wobei das Verfahren umfasst: Ermitteln einer Montageanweisung in Abhängigkeit von dem Klemmzustand.

Durch die Montageanweisung wird ermöglicht, dass der Monteur die sensible Membran mit einer ausreichenden und gleichmäßigen, d.h. homogenen Klemmung ohne einen vorgesehenen Endanschlag montiert. Hierbei unterstützt die Montageanweisung ihn zielgerichtet, was die Montagedauer weitergehend verkürzt. Insbesondere wird die Montage über deren Zeitdauer überwacht, da die Relaxation von Elastomeren zeitabhängig ist.

Ein vorteilhaftes Beispiel zeichnet sich dadurch aus, dass wenigstens eines der Mehrzahl von Signalen von einem Stellbereich der Sensorlage angeordneten Drucksensoren stammen, wobei der Zustand der Membran einen Anpressdruck der Membran auf einen Ventilsitz eines Ventilkörpers umfasst; und Betreiben eines Ventilantriebs in Abhängigkeit von dem ermittelten Anpressdruck.

Durch die Ermittlung des Anpressdrucks ist die gesamte Krafthöhe, mit der die Membran auf den Ventilsitz drückt, bekannt. Damit wird ein kraftgesteuertes bzw. weggesteuertes Fahren in Abhängigkeit von dem ermittelten Anpressdruck ermöglicht.

In der Zeichnung zeigen:
- Figuren 1a, 1b: jeweils eine Sensorlage;
- Figur 2: eine Membran;
- Figur 3: ein Membranventil;
- Figuren 4a, 4b und 5: jeweils ein Beispiel für einen Drucksensor;
- Figur 6: ein schematisches Ablaufdiagramm;
- Figuren 7 und 8: Anwendungsbeispiele für die Sensorlage;
- und Figuren 9 und 10: schematische Blockdiagramme.

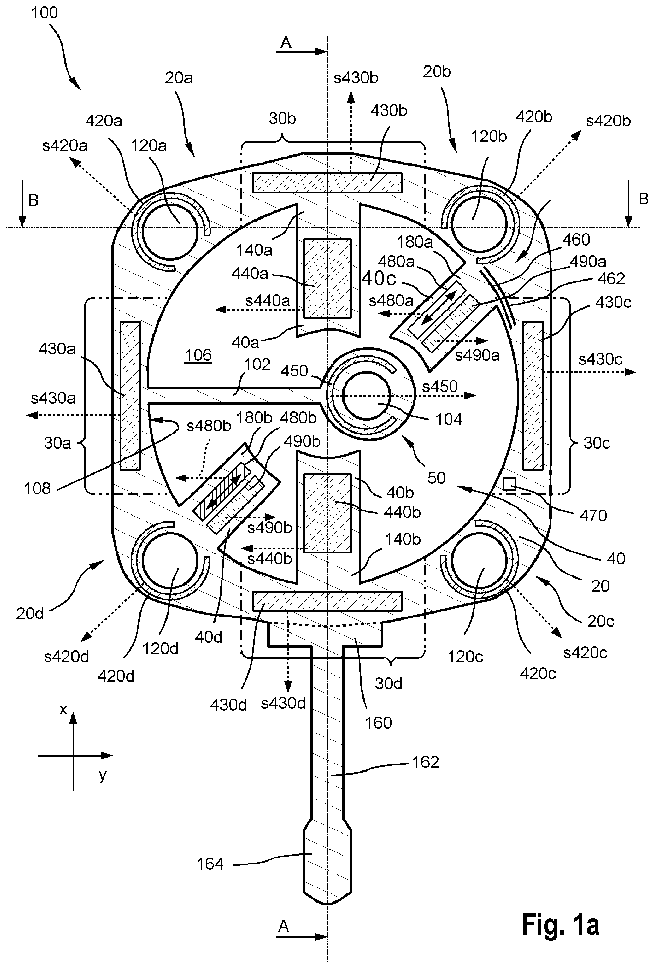

Figur 1a zeigt eine schematische Draufsicht auf eine einstückige Sensorlage 100 zur Anordnung auf einer Trockenseite einer Membran eines Membranventils. Eine Mehrzahl von Drucksensoren 420a-d, 430a-d, 440a-b, 450 sind zur Erzeugung eines jeweiligen Signals s420a-d, s430a-d, s440a-b, s450, welches eine lotrecht zum jeweils zugeordneten Abschnitt 20a-d, 30a-d, 40a-b, 50 der Sensorlage 100 wirkende Kraft charakterisiert, ausgebildet. Die Sensorlage 100 umfasst eine innere Durchgangsöffnung 106, deren äußerer Rand 108 einen Stellbereich 40 von einem Klemmbereich 20 trennt. Der Stellbereich 40 wird beim Öffnen und Schließen des Membranventils bewegt, wohingegen der Klemmbereich 20 statisch zwischen zwei Flanschen verpresst wird.

Die Sensorlage 100 wird beispielsweise formschlüssig zu der Membran in Position gebracht, beispielsweise über korrespondierende Durchgangsöffnungen für Stehbolzen. Zusätzlich oder alternativ ist die Verbindung mit der Membran auch über einen Klettverschluss oder Einrastungen möglich.

Die Sensorlage 100 umfasst wenigstens ein Trägermaterial, an welchem die Sensoren wie beispielsweise die Drucksensoren 420a-d; 430a-d; 440a-b; 450 oder Dehnungssensoren 480a; 480b befestigt sind. Das Trägermaterial kann beispielsweise eine der Oberflächen der Sensorlage 100 bilden.

Eine Gruppe von Spannabschnitten 20a-d des Klemmbereichs 20 der Sensorlage 100 sind voneinander beabstandet angeordnet. Der jeweilige Spannabschnitt 20a-d umfasst wenigstens einen der Mehrzahl von Drucksensoren 420a-d. Der jeweilige wenigstens eine Drucksensor 420a-d in dem Spannabschnitt 20a-d ist zur Erzeugung eines jeweiliges Signals s420a-d, welches eine lotrecht zum zugeordneten Spannabschnitt 20a-d wirkende Kraft charakterisiert, ausgebildet. Der Spannabschnitt 20a-d umfasst eine jeweilige Durchgangsöffnung 120a-d zur Hindurchführung beispielsweise eines Stehbolzens. Die Positionen der Durchgangsöffnungen 120a-d korrespondieren mit Positionen von Durchgangsöffnungen der zugeordneten Membran.

Die Sensorlage 100 umfasst in dem Klemmbereich 20 eine Gruppe von äußeren Dichtabschnitten 30a-d umfasst, wobei der jeweilige äußere Dichtabschnitt 30a-d wenigstens einen der Mehrzahl von Drucksensoren 430a-d umfasst. Einer der Dichtabschnitte 30a-d befindet sich zwischen zwei der Spannabschnitte 20a-d. Der jeweilige wenigstens eine Drucksensor 430a-d in dem äußeren Dichtabschnitt 30a-d ist zur Erzeugung eines jeweiliges Signals s430a-d, welches eine lotrecht zum zugeordneten äußeren Dichtabschnitt 30a-d wirkende Kraft charakterisiert, ausgebildet.

Die Sensorlage 100 umfasst in dem Stellbereich 40 einen über einen Steg 102 mit dem Klemmbereich 20 verbundenen und wenigstens abschnittsweise um eine Durchgangsöffnung 104 angeordneten Stellabschnitt 50, wobei der über den Steg 102 verbundene Stellabschnitt 50 wenigstens einen der Mehrzahl von Drucksensoren 450 umfasst. Der jeweilige wenigstens eine Drucksensor 450 in dem Stellabschnitt 50 ist zur Erzeugung eines jeweiliges Signals s450, welches eine lotrecht zum zugeordneten Stellabschnitt 50 wirkende Kraft charakterisiert, ausgebildet.

Der jeweilige wenigstens eine Drucksensor 440a-b in dem jeweiligen Stellabschnitt 40a-b ist zur Erzeugung eines jeweiliges Signals s440a-b, welches eine lotrecht zum zugeordneten Stellabschnitt 40a-b wirkende Kraft charakterisiert, ausgebildet.

Die gezeigten Stege 140a-b können auch anders ausgebildet sein. Beispielsweise ist ein jeweiliger Steg zur Anbindung des inneren Dichtabschnitts 40a-b und der dort angeordneten Drucksensoren 440a-b soweit ausgeschnitten, dass radial wirkende Zug- und Walkkräfte den Steg nicht beschädigen. Beispielsweise folgt der Steg ausgehend von dem jeweiligen inneren Dichtabschnitt 40a-b bis zum Klemmbereich 20 wenigstens abschnittsweise einer Spiralform oder einer Mäanderform.

Vorliegend liegen sich die zwei inneren Dichtabschnitte 40a-b gegenüber und erlauben eine Ermittlung des Drucks zu beiden Seiten der Stellachse. Die beiden Drucksensoren 440a-b liegen zumindest abschnittsweise in einer gedachten lotrecht zum jeweiligen inneren Dichtabschnitt 40a-b verlaufenden und durch die Stellachse verlaufende Dichtstegebene.

Der jeweilige wenigstens eine Dehnungssensor 480a-b in einem jeweiligen Stellabschnitt 40c-d ist zur Erzeugung eines jeweiliges Signals s480a-b, welches eine in der Sensorlagenfläche des jeweiligen Stellabschnitts 40c-d wirkende Dehnung charakterisiert, ausgebildet. Beispielsweise wird die Dehnung in radialer Richtung gemäß den skizzierten Doppelpfeilen gemessen. In einem nicht gezeigten Beispiel ist der wenigstens eine Dehnungssensor 480a-b so angeordnet, dass eine Dehnung in einer anderen Richtung innerhalb der Fläche des Stellabschnitts 40c-d verläuft.

Die Sensorlage 100 umfasst in dem Stellbereich 40 den wenigstens einen über einen Steg 180a, 180b mit dem Klemmbereich 20 verbundenen inneren Stellabschnitt 40c-d. Der Stellabschnitt 40c-d ist außerhalb der Stellabschnitte 40a-b angeordnet. Der Stellabschnitt 40c-d ist damit in einem nicht Stelldruck-relevanten Bereich angeordnet, also außerhalb des Bereichs der Sensorlage 100, in dem das Druckstück den Dichtsteg der Membran auf den Ventilsitz drückt. Vorteilhaft wird mittels des über den wenigstens einen Dehnungssensor 480a-b ermittelten Signals s480a-b auf einen Zug bzw. eine Dehnung der Membran in der Membranfläche geschlossen.

Die gezeigten Stege 180a-b können auch anders ausgebildet sein. Beispielsweise ist ein jeweiliger Steg zur Anbindung des inneren Stellabschnitts 40c-d und der dort angeordneten Dehnungssensoren 480a-b soweit ausgeschnitten, dass radial wirkende Zug- und Walkkräfte den Steg nicht beschädigen. Beispielsweise folgt der Steg ausgehend von dem jeweiligen inneren Stellabschnitt 40c-d bis zum Klemmbereich 20 wenigstens abschnittsweise einer Spiralform oder einer Mäanderform.

Vorliegend liegen sich die zwei inneren Stellabschnitte 40c-d gegenüber und erlauben eine Ermittlung des Drucks zu beiden Seiten des Dichtstegs oder des nassseitigen Dichtbereichs der Membran. Die beiden Dehnungssensoren 480a-b liegen zumindest außerhalb und beabstandet von der gedachten lotrecht zum jeweiligen inneren Dichtabschnitt 40a-b verlaufenden und durch die Stellachse verlaufende Dichtstegebene.

In dem nicht Stelldruck-relevanten Stellabschnitt 40c-d ist der wenigstens eine Dehnungssensor 480a-b angeordnet. Der wenigstens eine Dehnungssensor 480a-b ist zur Erzeugung eines jeweiligen Signals s480a-b, welches eine parallel auf den zugeordneten nicht Stelldruck-relevanten Stellabschnitt 40c-d der Sensorlage 100 wirkende Dehnung charakterisiert, ausgebildet.

In dem jeweiligen nicht Stelldruck-relevanten Stellabschnitt 40c-d ist der wenigstens eine Drucksensor 490a-b angeordnet. Das zu stellende Prozessmedium drückt über die Membran auf den nicht Stelldruck-relevanten Stellabschnitt 40c-d, welcher trockenseitig von einem Druckstück abgestützt wird. Das wenigsten eine Signal s490a-b dient zur Ermittlung eines Systemdrucks des Prozessfluids.

Befinden sich zu beiden Seiten der gedachten Ebene durch den Dichtsteg der zugeordneten Membran die Drucksensoren 490a-b, dann lässt sich der jeweilige Systemdruck zu beiden Seiten des Dichtstegs auch bei geschlossenem Membranventil ermitteln.

Eine Lasche 160 der Sensorlage 100 ragt über den Klemmbereich 20 der Sensorlage 100 hinaus. Nicht dargestellte Signalleitungen der Drucksensoren 420a-d, 430a-d, 440a-b, 450, 490a-b und weiterer Sensoren sind zumindest abschnittsweise über die Lasche 160 und einen sich an die Lasche 160 anschließenden Verbindungssteg 162 bis zu einem Anschlussbereich 164 geführt. In dem Anschlussbereich 164 befinden sich elektrische Kontakte, welche mit den jeweiligen Signalleitungen der Drucksensoren 420a-d, 430a-d, 440a-b, 450, 490a-b und weiterer Sensoren verbunden sind.

Ein Feuchtigkeitssensor zur Erzeugung eines Signals s460, welches einen Kontakt einer Flüssigkeit mit der Sensorlage 100 indiziert, umfasst wenigstens zwei elektrische Leiter 460, 462, welche zumindest abschnittsweise benachbart zueinander an einer Oberfläche 160 der Sensorlage 100 verlaufen.

Dargestellt ist nur ein Ausschnitt der elektrischen Leiter 460 und 462. Die Leiter 460 und 462 laufen beispielsweise parallel zueinander wenigstens abschnittsweise umfangsseitig um die innere Durchgangsöffnung 106. In einem Beispiel ragt ein innerer Kragen der Sensorlage 100 vom Klemmbereich 20 ab und wird nicht verklemmt. So kann ein Eintritt von Feuchtigkeit in den Trockenbereich des Membranventils mittels des Feuchtigkeitssensors ermittelt werden.

Die Sensorlage 100 umfasst einen Temperatursensor 470 zur Erzeugung eines Signals s470, welches eine Temperatur der Sensorlage 100 charakterisiert.

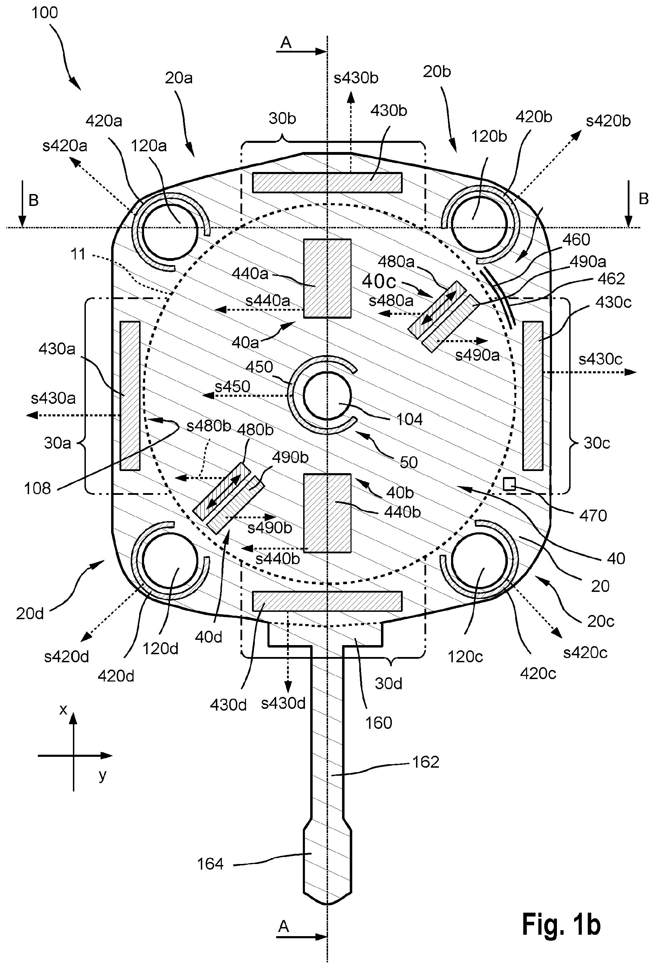

Figur 1b zeigt eine schematische Draufsicht auf die einstückige Sensorlage 100, welche im Unterschied zur Figur 1a zumindest im Stellbereich flexibel ausgebildet ist und keine Durchgangsöffnung 106 aufweist. Eine gedachte Trennlinie 11 trennt den Klemmbereich 20 von dem Stellbereich 40. Des Weiteren ist die Sensorlage der Figur 1b zumindest im inneren Stellbereich 40 elastisch ausgebildet, um die Bewegung der im Betrieb anliegenden Membran nachzubilden. Für die übrigen Merkmale wird auf die Beschreibung zur Figur 1a verwiesen.

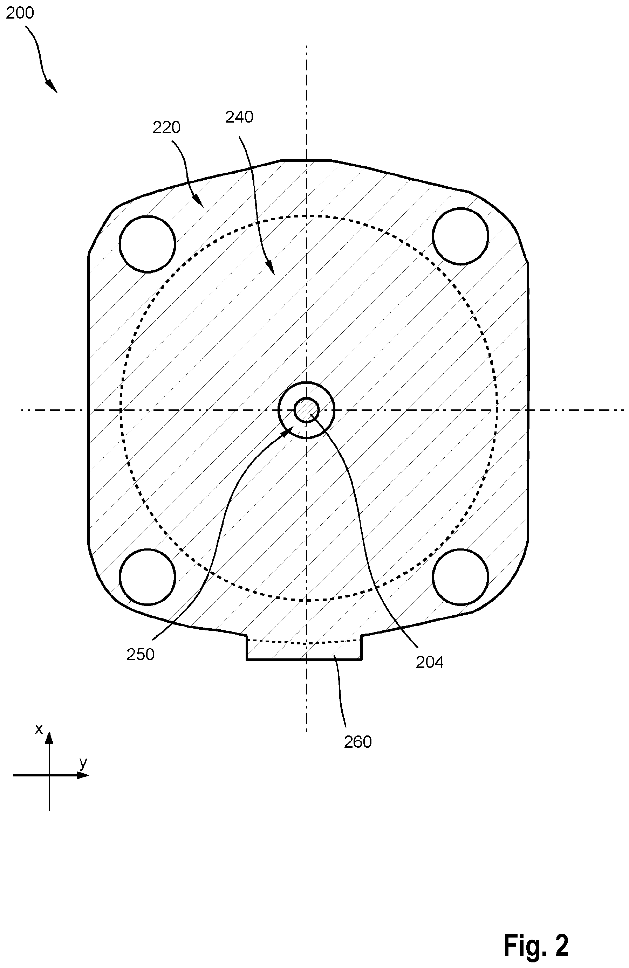

Figur 2 zeigt eine schematische Draufsicht auf die Trockenseite der beispielsweise aus einem Elastomer oder einem Thermoplast gefertigten Membran 200, die mittels der von der Membran 200 separaten Sensorlage 100 aus Figur 1 überwacht wird. Es ist die Trockenseite der Membran 200 gezeigt, die einer nicht gezeigten Nassseite für Medienkontakt gegenüberliegt. Eine Lasche 260 ragt über den Klemmbereich 220 der Membran 200 hinaus. Innerhalb des Klemmbereichs 220 umfasst die Membran 200 eine Stelloberfläche 240, auf die zumindest abschnittsweise ein Druckstück zum Schließen des Fluidkanals drückt und damit das Prozessfluid stellt. Die Membran 200 umfasst einen zentralen Anschlussabschnitt 204, beispielsweise einen in z-Richtung abragenden Dorn, zum Anschluss an ein entlang der Stellachse bewegliches Druckstück oder eine entlang der Stellachse bewegliche Ventilstange. Der Anschlussabschnitt 204 ist von einer Stelloberfläche 250 umgeben, auf die ein Abschnitt des Druckstücks oder der Ventilstange bei der Bewegung in Richtung Ventilsitz drückt.

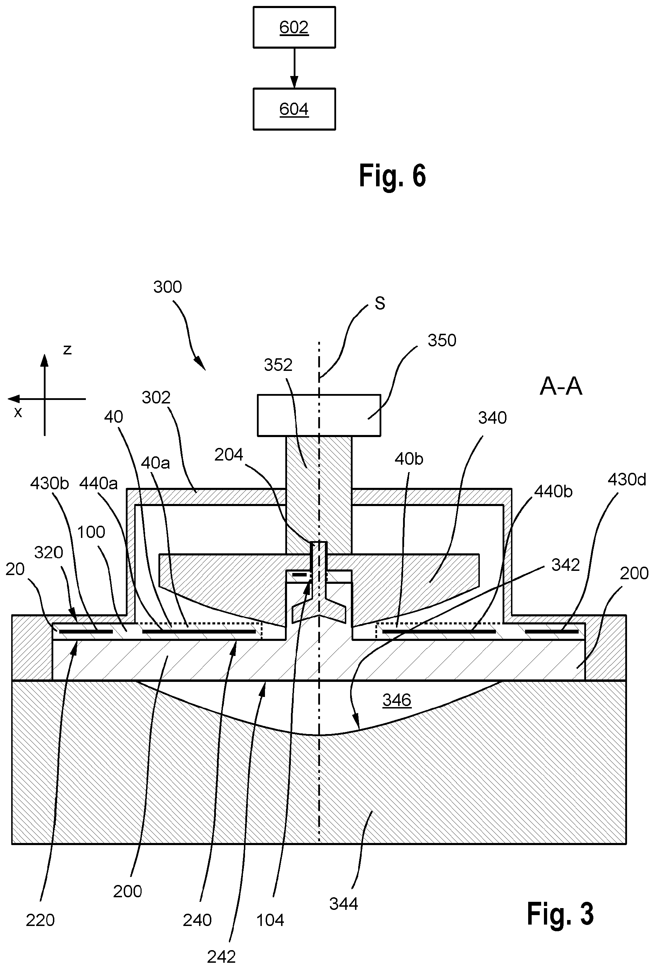

Figur 3 zeigt in einem schematischen Schnitt A-A gemäß Figur 1 das Membranventil 300. Der Klemmbereich 20 der Sensorlage 100 ist zumindest abschnittsweise zwischen einem Antriebskörper 302 und der Membran 200 verpresst bzw. verspannt ist. Alternativ kann auch ein Zwischenstück vorhanden sein, welches zwischen dem Antriebskörper und der Sensorlage 100 angeordnet ist. Der Stellbereich 40 der Sensorlage 100 ist zumindest abschnittsweise zwischen einem Druckstück 340 und der Membran 200 angeordnet.

Ein Ventilantrieb 350 ist beispielsweise als Elektromotor oder als Pneumatikantrieb ausgebildet. Der Ventilantrieb 350 bewegt eine Ventilstange 352 und das an der Ventilstange 352 angeordnete Druckstück 340 entlang der Stellachse S. Die Membran 200 ist über deren Anschlussabschnitt 204 mit dem Druckstück 340 und/oder mit der Ventilstange 352 verbunden.

Der laterale Klemmbereich 20 der Sensorlage 100 wird zwischen einem Flansch 320 eines Antriebskörpers 302 und einem Klemmbereich der Membran 200 angeordnet. Der Klemmbereich 20 der Sensorlage 100 überdeckt wenigstens abschnittsweise eine trockenseitige Oberfläche des Klemmbereichs 220 der Membran 200 zumindest abschnittsweise.

Der Stellbereich 40 der Sensorlage 100 überdeckt eine Stelloberfläche 240 bzw. Funktionsfläche der Membran 200 zumindest abschnittsweise. Die Durchgangsöffnung 104 ist zum Durchführen eines zentralen Anschlussabschnitts der Membran ausgebildet.

Die Sensorlage 100 umfasst in dem Stellbereich 40 wenigstens einen über einen Steg 140a, 140b mit dem Klemmbereich 20 verbundenen inneren Dichtabschnitt 40a-b, wobei der innere Dichtabschnitt 40a-b wenigstens einen der Mehrzahl von Drucksensoren 440a-b umfasst. Bei der Bewegung des Druckstücks 340 in Richtung eines Ventilsitzes 432 beispielsweise eines Dichtstegs, drückt die membranseitige Oberfläche des Druckstücks 340 auf den inneren Dichtabschnitt 40a-b der Sensorlage. Bei Anlage der nassseitigen Oberfläche 242 der Membran 200, beispielsweise eines Dichtstegs, an dem Ventilsitz 342 eines Ventilkörpers 344 wird der Prozessfluidkanal 346 des Membranventils 300 verschlossen. Der jeweilige Anpressdruck zwischen dem Ventilsitz 342 und der Membran 200 wird durch die mittels der Drucksensoren 440a-b ermittelten Signale s440a-b indiziert.

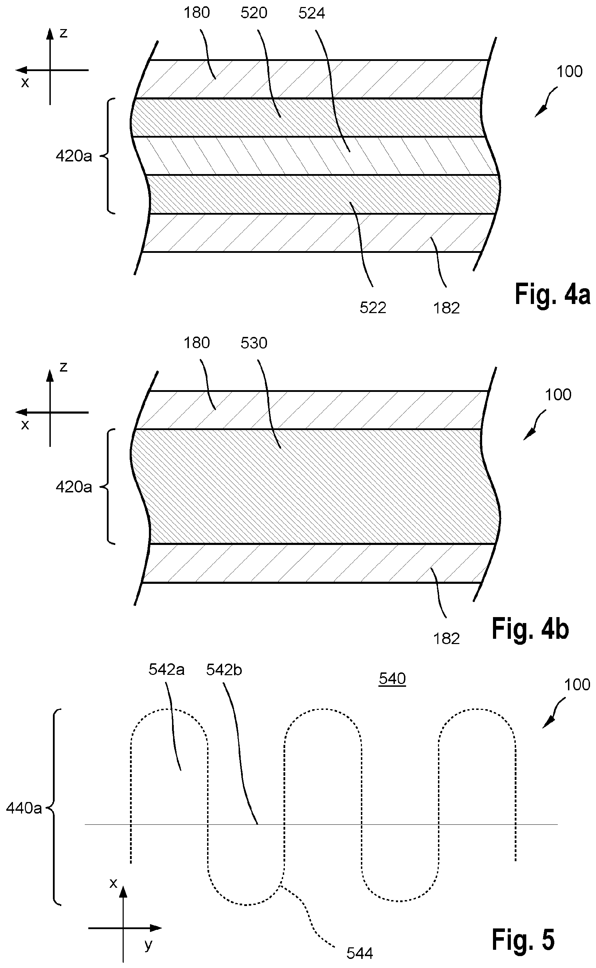

Figur 4a zeigt beispielhaft den Aufbau des Drucksensors 420a. Selbstverständlich können auch alle anderen Drucksensoren der Sensorlage 100 analog aufgebaut sein. Der Drucksensor 420a ist von Schichten 180, 182 der Sensorlage 100 umschlossen. Die Sensorlage 100 umfasst wenigstens einen der Mehrzahl von Drucksensoren insbesondere in einem Klemmbereich 20 der Sensorlage 100, wobei zwei parallel zu einer Ebene der Sensorlage 100 verlaufende Elektroden 520, 522 durch ein elastisches Dielektrikum 524 voneinander getrennt sind. Bei einem Zusammendrücken des elastischen Dielektrikums ändert sich die über zugeführte Messleitungen messbare elektrische Kapazität.

Figur 4b zeigt beispielhaft den Aufbau des Drucksensors 420a. Selbstverständlich können auch alle anderen Drucksensoren der Sensorlage 100 analog aufgebaut sein. Der Drucksensor 420a ist von Schichten 180, 182 der Sensorlage 100 umschlossen. Die Sensorlage 100 umfasst wenigstens einen der Mehrzahl von Drucksensoren insbesondere in einem Klemmbereich 20 der Sensorlage 100, wobei eine elastische Widerstandsschicht 530 ihren über zugeführte Messleitungen messbaren elektrischen Widerstand ändert, wenn sich ein parallel zur z-Achse aufgebrachter Druck ändert.

Figur 5 zeigt beispielhaft den Aufbau des Drucksensors 440a im Sinne einer resistiven Sensorik. Selbstverständlich können auch alle anderen Drucksensoren der Sensorlage 100 analog aufgebaut sein. Wenigstens einer der Mehrzahl von Drucksensoren insbesondere in einem Stellbereich 40 der Sensorlage 100 umfasst ein textiles Gewebe 540. Das textile Gewebe 540 umfasst eine Mehrzahl von steif ausgeführten, durch das textile Gewebe 540 voneinander getrennten ersten Elektroden 542a-b. Das textile Gewebe 540 umfasst wenigstens eine flexibel ausgeführte, durch das Gewebe 540 von den ersten Elektroden 542a-b getrennte zweite Elektrode 544. Die ersten Elektroden 542a-b und die wenigstens eine zweite Elektrode 544 kreuzen sich mehrfach.

Selbstverständlich kann auch die zweite Elektrode 544 steif und die ersten Elektroden 542a-b flexibel ausgeführt sein. In einer weiteren Ausführungsform sind die ersten Elektroden 542a-b und die zweite Elektrode 544 steif ausgeführt.

Die zweite Elektrode 544 verläuft mäanderförmig über oder unter den ersten Elektroden 542a-b. Bei einem Zusammendrücken der Sensorlage 100 entlang der z-Achse verkürzt sich die Distanz zwischen den ersten Elektroden 542a-b und der zweiten Elektrode in den überkreuzenden Bereichen. Damit findet insbesondere bei direkter Kontaktierung in den überkreuzenden Bereichen eine elektrische Kontaktierung statt, was sich beispielsweise über eine Widerstandsmessung zwischen den zwei ersten Elektroden 542a-b feststellen lässt.

Figur 6 zeigt ein schematisches Blockdiagramm.

Mittels einer Auswerteeinheit findet ein Empfangen 602 einer Mehrzahl von Signalen statt, welche von den Drucksensoren ausgehen. Die Signale charakterisieren die jeweils eine lotrecht auf einen zugeordneten Abschnitt der Sensorlage wirkende Kraft. Ein Zustand der Membran wird ermittelt 604, und zwar in Abhängigkeit von der Mehrzahl von Signalen.

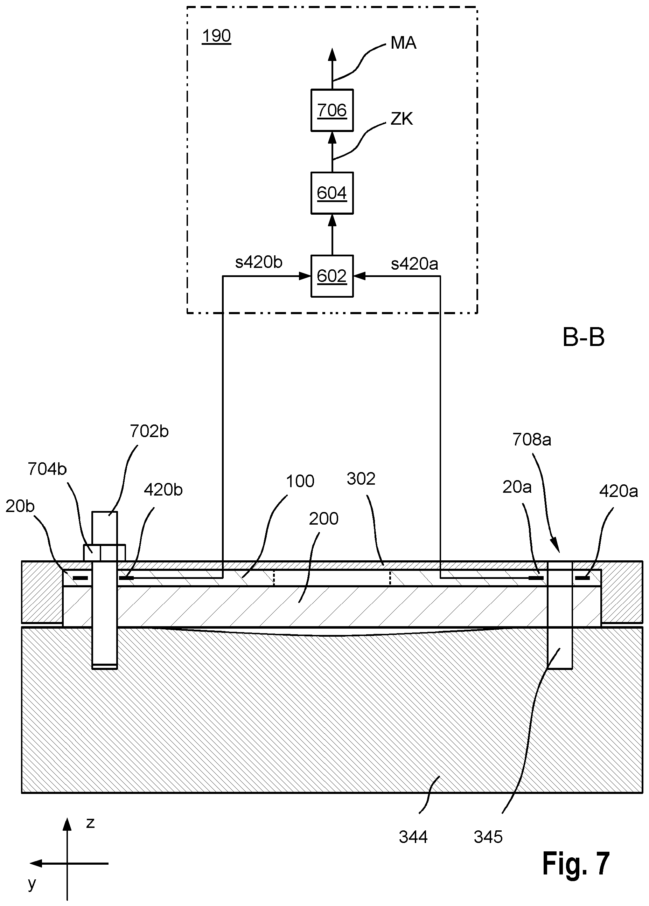

Figur 7 zeigt ein schematisches Blockdiagramm und einen schematischen Schnitt B-B gemäß Figur 1a. Mittels der Auswerteeinheit 190 findet das Empfangen 602 der Mehrzahl von Signalen s420a-d, beispielhaft repräsentiert durch die Signale s420a-b, statt, welche von den Drucksensoren 420a-d ausgehen. Die Signale s420a-d charakterisieren die jeweils eine lotrecht auf einen zugeordneten Abschnitt 20a-d der Sensorlage 100 wirkende Kraft. Ein Zustand der Membran 200 wird ermittelt 604, und zwar in Abhängigkeit von der Mehrzahl von Signalen s420a-d.

Die Mehrzahl von Signalen s420a-d umfasst wenigstens eine Gruppe von Signalen, welche von in jeweiligen Spannabschnitten 20a-d der Sensorlage 100 angeordneten Drucksensoren 420a-d stammen. Der Zustand der Membran 200 umfasst einen Klemmzustand ZK der Membran 200 mit lotrecht auf den jeweiligen Spannabschnitten 20a-d wirkenden Kräften. Eine Ermittlung 706 einer Montageanweisung MA wird in Abhängigkeit von dem Klemmzustand ZK durchgeführt.

Beispielsweise wird für einen jeweiligen der Spannabschnitte 20a-b eine Ist-Klemmkraft ermittelt. Die Ist-Klemmkräfte werden jeweils mit einer vorgegebenen Soll-Klemmkraft oder einem zeitlichen Soll-Klemmkraftverlauf verglichen. In Abhängigkeit von dem Vergleich wird die wenigstens eine Montageanweisung MA ermittelt, die beispielsweise die Erhöhung oder Verringerung der jeweiligen Klemmkraft in dem zugeordneten Spannabschnitt 20a-b indiziert. Die Montageanweisung wird über einen Bildschirm oder andere Anzeigemittel wie beispielsweise LEDs an den Monteur ausgegeben. Beispielsweise umfasst die Montageanweisung MA eine Drehrichtung einer einem der Stehbolzen 702b zugeordneten Klemmmutter 704b. Hierbei wird die jeweilige Klemmmutter 704b über die Montageanweisung MA, die eine eindeutige Kennung für die Klemmmutter 704b umfasst, identifiziert. Beispielsweise umfasst die dem Monteur angezeigte Montageanweisung MA, zu welchem Zeitpunkt die Schrauben (Anziehen erfolgt überkreuzt) gewechselt werden soll. Des Weiteren wird über die Montageanweisung MA dem Monteur angezeigt, wann eine max. Montagezeit erreicht wird bzw. ist. So lassen sich die einzelnen Klemmmuttern schnell und einfach nachziehen.

Rechterhand ist beispielhaft eine gemeinsame Durchgangsöffnung 708a des Antriebskörpers 302, der Sensorlage 100 und der Membran 200 ohne Stehbolzen gezeigt, durch welche der zugordnete Stehbolzen mit seinem Außengewinde geführt und in ein Innengewinde einer Sacklochbohrung 345 des Ventilkörpers 344 eingedreht ist. Über die dem Stehbolzen zugeordnete Klemmmutter wird der Antriebskörper 302, die Sensorlage 100 und die Membran 200 so verklemmt, dass das Membranventil nach außen dicht ist.

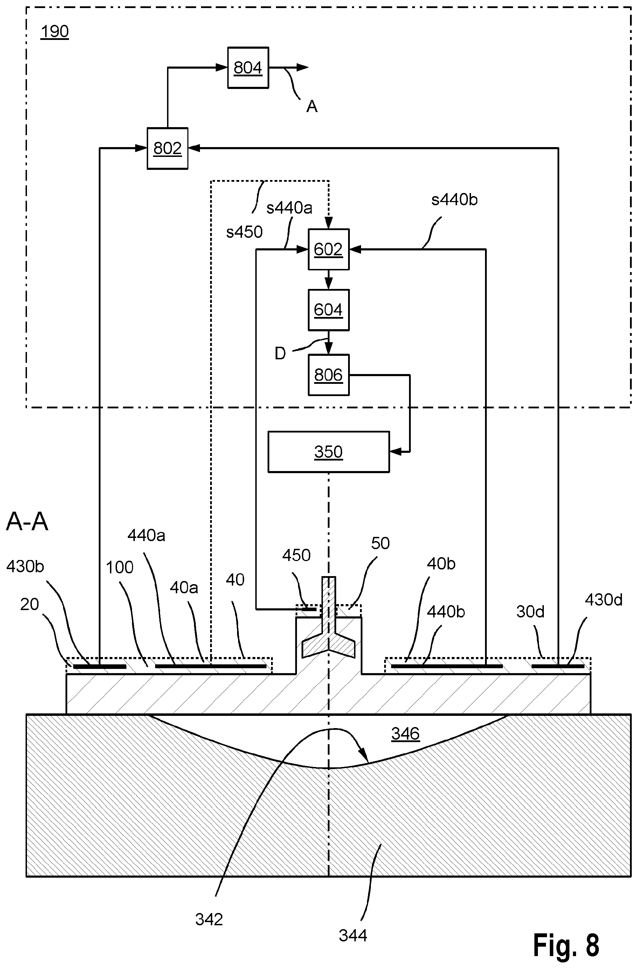

Figur 8 zeigt ein schematisches Blockdiagramm und einen schematischen Schnitt A-A gemäß Figur 1a analog zur Figur 3. Das wenigstens eine der Mehrzahl von Signalen s440a-b stammt von einem in einem Stellbereich 40 der Sensorlage 100 angeordneten Drucksensor 440a-b. Der Zustand der Membran 200 umfasst einen Anpressdruck D bzw. eine Anpresskraft der Membran 200 auf den Ventilsitz 342 des Ventilkörpers 344. Mittels der Auswerteeinheit 190 wird ein Ventilantrieb 350 in Abhängigkeit von dem ermittelten Anpressdruck D bzw. der Anpresskraft betrieben 806, wobei im Schritt 806 beispielsweise ein Regelverfahren zum Regeln einer Anpresskraft oder eines Stellwegs Verwendung findet.

In einem Beispiel wird das Signal s450 des Drucksensors 450 berücksichtigt, um die Ermittlung 604 des Anpressdrucks D bzw. der Anpresskraft zu ermitteln.

Ein Empfangen 802 der Signale s430b und s430d ermöglicht einen relativen Vergleich oder einen absoluten Vergleich. Ein relatives Vergleichen 804 kann zu einer Differenz führen, die, wenn Sie einen vorgegebenen Schwellwert überschreitet zu einer Ausgabe einer Anweisung A führen, die, analog zur Montageanweisung MA, ein Nachziehen einzelner Klemmmuttern erfordert.

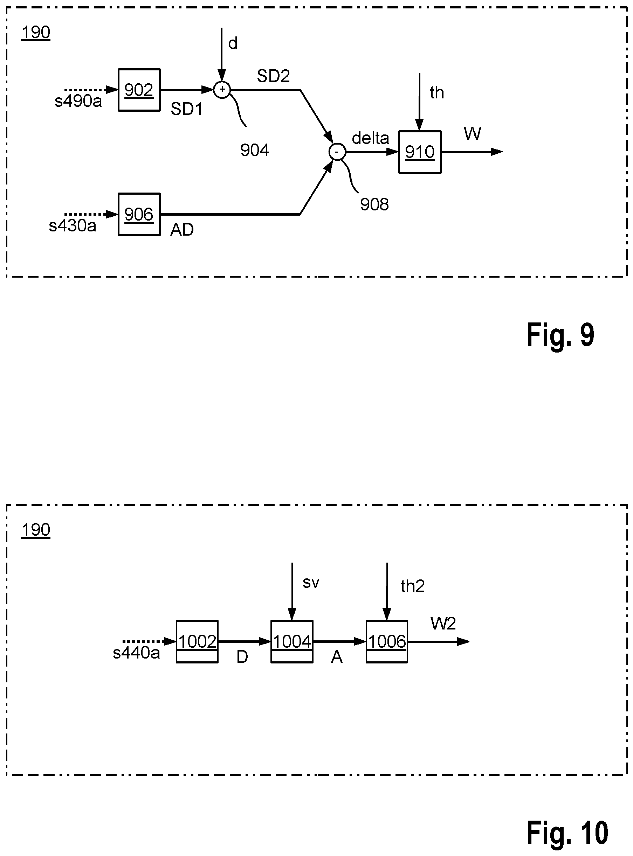

Figur 9 zeigt ein schematisches Blockdiagramm zum Betreiben der Auswerteeinheit 190. Gemäß einem Block 902 wird ein Systemdruck SD1 in Abhängigkeit von dem Signal s490a ermittelt, welches von wenigstens einem in einem nicht Stelldruck-relevanten Stellabschnitt 40c-d der Sensorlage angeordneten Sensor stammt. Gemäß einer Additionsstelle 904 wird ein zweiter Systemdruck SD2 in Abhängigkeit von dem ersten Systemdruck SD1 und in Abhängigkeit von einem Offset d ermittelt. Ein Anpressdruck AD im lateralen Bereich der Sensorlage wird gemäß dem Block 906 ermittelt und repräsentiert bzw. entspricht dem Anpressdruck im lateralen Bereich der Membran. Der Anpressdruck AD wird in Abhängigkeit von dem Signal s430a, welches von wenigstens einem der in einem Klemmbereich der Sensorlage angeordneten Sensoren stammt, ermittelt. Eine Druckdifferenz delta zwischen dem Systemdruck SD2 und dem lateralen Anpressdruck AD wird gemäß der Subtraktionsstelle 908 ermittelt. Gemäß dem Block 910 wird der Zustand der Membran in Form einer mangelnden Dichtheit nach außen ermittelt, wenn die Druckdifferenz delta einen vorab bestimmten Schwellwert th unterschreitet. Diese festgestellte mangelnde Dichtheit nach außen wird beispielsweise mittels einer Warnung W ausgegeben. So wird eine Soll-Kontaktspannung nicht unterschritten und die Dichtheit nach außen kann ständig überwacht werden.

Figur 10 zeigt ein schematisches Blockdiagramm zum Betreiben der Auswerteeinheit 190. Gemäß einem Block 1002 wird ein Anpressdruck D der Membran auf den Ventilsitz des Ventilkörpers in Abhängigkeit von einem der Signale s440a-b ermittelt, welches von einem in einem der Stelldruck-relevanten Druckbereiche angeordneten Sensor 440a-b stammt. Gemäß dem Block 1004 wird eine Abweichung A eines zeitlichen Ist-Verlaufs des Anpressdrucks D von einem vorab ermittelten zeitlichen Soll-Verlauf sv des Anpressdrucks D ermittelt. Mit der Abweichung A kann auf eine mangelnde oder genügende Elastizität der Membran im abdichtenden nassseitigen Bereich geschlossen werden. Gemäß einem Block 1006 wird der Zustand der Membran in Form einer mangelnden Dichtheit nach innen ermittelt, wenn die Abweichung A einen Schwellwert th2 überschreitet. Die mangelnde Dichtheit nach außen wird als Warnung W2 ausgegeben. Befindet sich die Abweichung hingegen unterhalb des Schwellwerts th2, so liegt eine ausreichende Dichtheit nach innen vor, was in nicht gezeigter Form als Gut-Nachricht ausgegeben werden kann.

## Patentansprüche

1. Ein Membranventil (300) umfassend:
einen Antriebskörper (302) oder einen Zwischenkörper;
eine Membran (200); und
ein Druckstück (340);
**gekennzeichnet durch**
eine Sensorlage (100), welche auf einer Trockenseite der Membran (200) angeordnet ist, wobei ein Klemmbereich (20) der Sensorlage (100) zumindest abschnittsweise zwischen dem Antriebskörper (302) und der Membran (200) oder zwischen dem Zwischenkörper und der Membran (200) verklemmt ist, wobei ein Stellbereich (40) der Sensorlage (100) zumindest abschnittsweise zwischen dem Druckstück (340) und der Membran (200) angeordnet ist, wobei die Sensorlage (100) eine Mehrzahl von Sensoren (420a-d; 430a-d; 440a-b; 450; 490a-b) umfasst, welche zur Erzeugung eines jeweiligen Signals (s420a-d; s430a-d; s440a-b; s450; s490a-b), welches eine auf einen jeweils zugeordneten Abschnitt (20a-d; 30a-d; 40a-b; 40b-d; 50) der Sensorlage (100) wirkende Kraft charakterisiert, ausgebildet sind.

2. Das Membranventil (300) gemäß dem Anspruch 1, wobei eine Gruppe von Spannabschnitten (20a-d) eines Klemmbereichs (20) der Sensorlage (100) voneinander beabstandet angeordnet sind, wobei der jeweilige Spannabschnitt (20a-d) wenigstens einen der Mehrzahl von Sensoren (420a-d) umfasst.

3. Das Membranventil (300) gemäß Anspruch 1, wobei die Sensorlage (100) in dem Klemmbereich (20) eine Gruppe von äußeren Dichtabschnitten (30a-d) umfasst, wobei der jeweilige äußere Dichtabschnitt (30a-d) wenigstens einen der Mehrzahl von Sensoren (430a-d) umfasst.

4. Das Membranventil (300) gemäß einem der vorigen Ansprüche 2 oder 3, wobei die Sensorlage (100) in dem Stellbereich (40) einen wenigstens abschnittsweise um eine Durchgangsöffnung (104) angeordneten Stellabschnitt (50) umfasst, wobei der über einen Steg (102) verbundene Stellabschnitt (50) wenigstens einen der Mehrzahl von Sensoren (450) umfasst.

5. Das Membranventil (300) gemäß einem der vorigen Ansprüche 2 bis 4, wobei die Sensorlage (100) in dem Stellbereich (40) wenigstens einen inneren Dichtabschnitt (40a-b) umfasst, wobei der innere Dichtabschnitt (40a-b) wenigstens einen der Mehrzahl von Sensoren (440a-b) umfasst.

6. Das Membranventil (300) gemäß einem der vorigen Ansprüche 1 bis 5, wobei die Sensorlage (100) in dem Stellbereich (40) wenigstens einen nicht Stelldruck-relevanten Stellabschnitt (40c-d) umfasst, wobei der nicht Stelldruck-relevante Stellabschnitt (40c-d) wenigstens einen der Mehrzahl von Sensoren (490a-b) umfasst.

7. Das Membranventil (300) gemäß einem der vorigen Ansprüche 1 bis 6, wobei die Sensorlage (100) in dem Stellbereich (40) wenigstens den einen oder einen weiteren nicht Stelldruck-relevanten Stellabschnitt (40c-d) umfasst, wobei der nicht Stelldruck-relevante Stellabschnitt (40c-d) wenigstens einen der Mehrzahl von Sensoren (480ab) umfasst, welcher zur Erzeugung eines jeweiligen Signals (s480a-b), welches eine parallel auf den zugeordneten nicht Stelldruck-relevanten Stellabschnitt (40c-d) der Sensorlage (100) wirkende Dehnung charakterisiert, ausgebildet ist.

8. Das Membranventil (300) gemäß einem der vorigen Ansprüche 1 bis 6, wobei wenigstens einer der Mehrzahl von Sensoren (420a-d; 430a-d; 440a-b; 450) insbesondere in dem Stellbereich (40) der Sensorlage (100) ein textiles Gewebe (540) umfasst, wobei das textile Gewebe (540) eine Mehrzahl von durch das textile Gewebe (540) voneinander getrennten ersten Elektroden (542a-b) umfasst, und wobei das textile Gewebe (540) wenigstens eine durch das Gewebe (540) von den ersten Elektroden (542a-b) getrennte zweite Elektrode (544) umfasst, und wobei die ersten Elektroden (542a-b) und die wenigstens eine zweite Elektrode (544) sich mehrfach kreuzen.

9. Das Membranventil (300) gemäß einem der vorigen Ansprüche, wobei ein Feuchtigkeitssensor zur Erzeugung eines Signals, welches einen Kontakt einer Flüssigkeit mit der Sensorlage (100) indiziert, wenigstens zwei elektrische Leiter (460, 462), welche zumindest abschnittsweise benachbart zueinander an einer Oberfläche (160) der Sensorlage (100) verlaufen, umfasst.

10. Das Membranventil (300) gemäß einem der vorigen Ansprüche umfassend einen Temperatursensor (470) zur Erzeugung eines Signals, welches eine Temperatur der Sensorlage (100) charakterisiert.

11. Das Membranventil (300) gemäß einem der vorigen Ansprüche, wobei wenigstens ein Teil der Mehrzahl von Sensoren (420a-d; 430a-d; 440a-b; 450) zur Erzeugung des jeweiligen Signals (s420a-d; s430a-d; s440a-b; s450), welches eine auf einen jeweils zugeordneten Abschnitt (20a-d; 30a-d; 40a-b; 40b-d; 50) der Sensorlage (100) lotrecht wirkende Kraft charakterisiert, ausgebildet ist.

12. Ein Verfahren zum Betreiben des Membranventils (300) gemäß einem der vorigen Ansprüche umfassend:
Empfangen (602) der Mehrzahl von Signalen (s420a-d; s430a-d; s440a-b; s450; s490a-b) ausgehend von den Sensoren (420a-d; 430a-d; 440a-b; 450; 490a-b) der Sensorlage (100); und
Ermitteln (604) eines Zustands der Membran (200) des Membranventils (300) in Abhängigkeit von der Mehrzahl von Signalen (s420a-d; s430a-d; s440a-b; s450; s490a-b).

13. Das Verfahren gemäß dem Anspruch 12, wobei die Mehrzahl von Signalen (s420a-d) wenigstens eine Gruppe von Signalen umfasst, welche von den in jeweiligen Spannabschnitten (20a-d) der Sensorlage (100) angeordneten Sensoren (420a-d) stammen, wobei der Zustand der Membran (200) einen Klemmzustand (ZK) der Membran (200) mit lotrecht auf den jeweiligen Spannabschnitten (20a-d) wirkenden Kräften umfasst,
wobei das Verfahren umfasst:
Ermitteln (706) einer Montageanweisung (MA) in Abhängigkeit von dem Klemmzustand (ZK).

14. Das Verfahren gemäß einem der Ansprüche 12 oder 13, wobei wenigstens eines der Mehrzahl von Signalen (s440a-b) von dem Stellbereich (40) der Sensorlage (100) angeordneten Sensoren (440a-b) stammen, wobei der Zustand der Membran (200) einen Anpressdruck (D) der Membran (200) auf einen Ventilsitz (342) eines Ventilkörpers (344) umfasst; und
Betreiben (806) eines Ventilantriebs (350) in Abhängigkeit von dem ermittelten Anpressdruck (D).

15. Das Verfahren gemäß dem Anspruch 12, wobei das Ermitteln (604) des Zustands der Membran (200) umfasst:
Ermitteln (902, 904) eines Systemdrucks (SD1; SD2) eines Prozessmediums in Abhängigkeit von einem der Signale (s490a-b), welches von wenigstens einem in einem nicht Stelldruck-relevanten Stellabschnitt (40c-d) der Sensorlage (100) angeordneten Sensor (490a-b) stammt;
Ermitteln (906) eines Anpressdrucks (D) der Membran (200) in Abhängigkeit von einem Signal (s430a), welches von wenigstens einem in einem Klemmbereich (20) der Sensorlage (100) angeordneten Sensor (430a-d) stammt;
Ermitteln (908) einer Druckdifferenz (delta) in Abhängigkeit von dem Systemdruck (SD1; SD2) und in Abhängigkeit von dem Anpressdruck (D); und
Ermitteln (910) des Zustands der Membran (200) in Form einer mangelnden Dichtheit nach außen, wenn die Druckdifferenz (delta) einen Schwellwert (th) unterschreitet.

16. Das Verfahren gemäß dem Anspruch 12, wobei das Ermitteln (604) des Zustands der Membran (200) umfasst:
Ermitteln (1002) eines Anpressdrucks (D) der Membran (200) auf einen Ventilsitz (342) eines Ventilkörpers (344) in Abhängigkeit von einem der Signale (s440ab), welches von einem in einem Stelldruck-relevanten Druckbereich (40a-b) angeordneten Sensor (440a-b) stammt;
Ermitteln (1004) einer Abweichung (A) eines zeitlichen Ist-Verlaufs des ermittelten Anpressdrucks (D) von einem zeitlichen Soll-Verlauf des Anpressdrucks (D);
Ermitteln (1006) des Zustands der Membran (200) in Form einer mangelnden Dichtheit nach innen, wenn die Abweichung (A) einen Schwellwert (th2) überschreitet.

## Claims

1. Diaphragm valve (300) comprising:
a drive body (302) or an intermediate body;
a diaphragm (200); and
a pressure piece (340);
**characterized by**
a sensor layer (100) separate from the diaphragm (200), wherein the sensor layer is arranged on a dry side (202) of the diaphragm (200), a clamping region (20) of the sensor layer (100) being clamped at least in portions between the drive body (302) and the diaphragm (200) or between the intermediate body and the diaphragm (200), wherein a control region (40) of the sensor layer (100) is arranged at least in portions between the pressure piece (340) and the diaphragm (200), the sensor layer (100) comprising a plurality of sensors (420a-d; 430a-d; 440a-b; 450; 490a-b) designed to generate a particular signal (s420a-d; s430a-d; s440a-b; s450; s490a-b) which characterizes a force acting on an associated portion (20a-d; 30a-d; 40a-b; 40b-d; 50) of the sensor layer (100) in each case.

2. Diaphragm valve (300) according to claim 1, wherein a group of clamping portions (20a-d) of a clamping region (20) of the sensor layer (100) are arranged at a distance from one another, wherein the particular clamping portion (20a-d) comprises at least one of the plurality of sensors (420a-d).

3. Diaphragm valve (300) according to claim 1, wherein the sensor layer (100) comprises a group of outer sealing portions (30a-d) in the clamping region (20), wherein the particular outer sealing portion (30a-d) comprises at least one of the plurality of sensors (430a-d).

4. Diaphragm valve (300) according to any of the preceding claims 2 or 3, wherein the sensor layer (100) comprises a control portion (50) arranged at least in portions around a through-opening (104) in the control region (40), wherein the control portion (50) connected via a connecting portion (102) comprises at least one of the plurality of sensors (450).

5. Diaphragm valve (300) according to any of the preceding claims 1 to 4, wherein the sensor layer (100) comprises at least one inner sealing portion (40a-b) in the control region (40), wherein the inner sealing portion (40a-b) comprises at least one of the plurality of sensors (440a-b).

6. Diaphragm valve (300) according to any of the preceding claims 1 to 5, wherein the sensor layer (100) comprises at least one non-control pressure-relevant control portion (40c-d) in the control region (40), wherein the non-control pressure-relevant control portion (40c-d) comprises at least one of the plurality of sensors (490a-b).

7. Diaphragm valve (300) according to any of the preceding claims 1 to 6, wherein the sensor layer (100) comprises at least one or an additional non-control pressure-relevant control portion (40c-d) in the control region (40), wherein the non-control pressure-relevant control portion (40c-d) comprises at least one of the plurality of sensors (480a-b) designed to generate a particular signal (s480a-b) which characterizes an elongation acting in parallel with the associated non-control pressure-relevant control portion (40c-d) of the sensor layer (100).

8. Diaphragm valve (300) according to any of the preceding claims 1 to 6, wherein at least one of the plurality of sensors (420a-d; 430a-d; 440a-b; 450) comprises a textile fabric (540) in particular in the control region (40) of the sensor layer (100), wherein the textile fabric (540) comprises a plurality of first electrodes (542a-b) separated from one another by the textile fabric (540), and wherein the textile fabric (540) comprises at least one second electrode (544) separated from the first electrodes (542a-b) by the fabric (540), and wherein the first electrodes (542a-b) and the at least one second electrode (544) intersect multiple times.

9. Diaphragm valve (300) according to any of the preceding claims, wherein a moisture sensor for generating a signal which indicates contact of a liquid with the sensor layer (100) comprises at least two electrical conductors (460, 462) which extend adjacent to one another at least in portions on a surface (160) of the sensor layer (100).

10. Diaphragm valve (300) according to any of the preceding claims, comprising a temperature sensor (470) for generating a signal which characterizes a temperature of the sensor layer (100).

11. Diaphragm valve (300) according to any of the preceding claims, wherein at least one portion of the plurality of sensors (420a-d; 430a-d; 440a-b; 450) is designed to generate the particular signal (s420a-d; s430a-d; s440a-b; s450) which characterizes a force acting perpendicularly to an associated portion (20a-d; 30a-d; 40a-b; 40b-d; 50) of the sensor layer (100) in each case.

12. Method for operating the diaphragm valve (300) according to any of the preceding claims, comprising:
receiving (602) the plurality of signals (s420a-d; s430a-d; s440a-b; s450; s490a-b) starting from the sensors (420a-d; 430a-d; 440a-b; 450; 490a-b) of the sensor layer (100); and
determining (604) a state of the diaphragm (200) of the diaphragm valve (300) on the basis of the plurality of signals (s420a-d; s430a-d; s440a-b; s450; s490a-b).

13. Method according to claim 12,
wherein the plurality of signals (s420a-d) comprises at least one group of signals which originate from the sensors (420a-d) arranged in respective voltage portions (20a-d) of the sensor layer (100), wherein the state of the diaphragm (200) comprises a clamping state (ZK) of the diaphragm (200) with forces acting perpendicularly to the respective clamping portions (20a-d), the method comprising:
determining (706) an assembly instruction (MA) on the basis of the clamping state (ZK).

14. Method according to either of claims 12 or 13, wherein at least one of the plurality of signals (s440a-b) originates from sensors (440a-b) arranged in the control region (40) of the sensor layer (100), wherein the state of the diaphragm (200) comprises a contact pressure (D) of the diaphragm (200) on a valve seat (342) of a valve body (344); and
operating (806) a valve drive (350) on the basis of the determined contact pressure (D).

15. Method according to claim 12, wherein determining (604) the state of the diaphragm (200) comprises:
determining (902, 904) a system pressure (SD1; SD2) of a process medium on the basis of one of the signals (s490a-b) which originates from at least one sensor (490a-b) arranged in a non-control pressure-relevant control portion (40c-d) of the sensor layer (100);
determining (906) a contact pressure (d) of the diaphragm (200) on the basis of a signal (s430a) which originates from at least one sensor (430a-d) arranged in a clamping region (20) of the sensor layer (100);
determining (908) a pressure difference (delta) on the basis of the system pressure (SD1; SD2) and on the basis of the contact pressure (D); and
determining (910) the state of the diaphragm (200) in the form of a lack of tightness toward the outside if the pressure difference (delta) falls below a threshold value (th).

16. Method according to claim 12, wherein determining (604) the state of the diaphragm (200) comprises:
determining (1002) a contact pressure (D) of the diaphragm (200) on a valve seat (342) of a valve body (344) on the basis of one of the signals (s440a-b) which originates from a sensor (440a-b) arranged in a control pressure-relevant pressure region (40a-b);
determining (1004) a deviation (A) of a temporal actual profile of the determined contact pressure (D) from a temporal setpoint profile of the contact pressure (D);
determining (1006) the state of the diaphragm (200) in the form of a lack of tightness toward the inside if the deviation (A) exceeds a threshold value (th2).

## Revendications

1. Soupape à membrane (300) comprenant:
un corps d'entraînement (302) ou un corps intermédiaire;
une membrane (200); et
une pièce de pression (340);
**caractérisé par**
une couche de capteurs (100) distincte du membrane (200), dans lequel la couche de capteur est disposée sur un côté sec (202) de la membrane (200), dans laquelle une zone de serrage (20) de la couche de capteurs (100) est serrée au moins sur certaines sections entre le corps d'entraînement (302) et la membrane (200) ou entre le corps intermédiaire et la membrane (200), dans laquelle une zone de réglage (40) de la couche de capteurs (100) est disposée au moins sur certaines sections entre la pièce de pression (340) et la membrane (200), dans laquelle la couche de capteurs (100) comprend une pluralité de capteurs (420a-d; 430a-d; 440a-b; 450; 490a-b), lesquels sont réalisés pour générer un signal (s420a-d; s430a-d; s440a-b; s450; s490a-b) respectif, lequel caractérise une force agissant sur une section (20a-d; 30a-d; 40a-b; 40b-d; 50) respectivement associée de la couche de capteurs (100).

2. Soupape à membrane (300) selon la revendication 1, dans laquelle un groupe de sections de tension (20a-d) d'une zone de serrage (20) de la couche de capteurs (100) sont espacées les unes des autres, dans laquelle la section de tension (20a-d) respective comprend au moins un de la pluralité de capteurs (420a-d).

3. Soupape à membrane (300) selon la revendication 1, dans laquelle la couche de capteurs (100) dans la zone de serrage (20) comprend un groupe de sections d'étanchéité extérieures (30a-d), dans laquelle chaque section d'étanchéité extérieure (30a-d) respective comprend au moins un de la pluralité de capteurs (430ad).

4. Soupape à membrane (300) selon l'une quelconque des revendications précédentes 2ou 3, dans laquelle la couche de capteurs (100) comprend, dans la zone de réglage (40), une section de réglage (50) disposée au moins sur certaines sections autour d'un orifice de passage (104), dans laquelle la section de réglage (50) reliée par l'intermédiaire d'une entretoise (102) comprend au moins un de la pluralité de capteurs (450).

5. Soupape à membrane (300) selon l'une quelconque des revendications précédentes 1 à 4, dans laquelle la couche de capteurs (100) dans la zone de réglage (40) comprend au moins une section d'étanchéité intérieure (40a-b), dans laquelle la section d'étanchéité intérieure (40a-b) comprend au moins l'un de la pluralité de capteurs (440a-b).

6. Soupape à membrane (300) selon l'une quelconque des revendications précédentes 1 à 5, dans laquelle la couche de capteurs (100) dans la zone de réglage (40) comprend au moins une section de réglage non pertinente pour la pression de réglage (40c-d), dans laquelle la section de réglage non pertinente pour la pression de réglage (40c-d) comprend au moins un de la pluralité de capteurs (490a-b).

7. Soupape à membrane (300) selon l'une quelconque des revendications précédentes 1 à 6, dans laquelle la couche de capteurs (100) dans la zone de réglage (40) comprend au moins la une ou une autre section de réglage non pertinente pour la pression de réglage (40c-d), dans laquelle la section de réglage non pertinente pour la pression de réglage (40c-d) comprend au moins l'un de la pluralité de capteurs (480a-b), lequel est réalisé pour générer un signal (s480a-b) respectif, lequel caractérise un allongement agissant parallèlement sur la section de réglage non pertinente pour la pression de réglage (40c-d) associée de la couche de capteurs (100).

8. Soupape à membrane (300) selon l'une quelconque des revendications précédentes 1 à 6, dans laquelle au moins l'un de la pluralité de capteurs (420a-d; 430a-d; 440a-b; 450) comprend, notamment dans la zone de réglage (40) de la couche de capteurs (100), un tissu textile (540), dans laquelle le tissu textile (540) comprend une pluralité de premières électrodes (542a-b) séparées les unes des autres par le tissu textile (540), et dans laquelle le tissu textile (540) comprend au moins une deuxième électrode (544) séparée des premières électrodes (542a-b) par le tissu (540), et dans laquelle les premières électrodes (542a-b) et la au moins une deuxième électrode (544) se croisent plusieurs fois.

9. Soupape à membrane (300) selon l'une quelconque des revendications précédentes, dans laquelle un capteur d'humidité destiné à générer un signal, lequel indique un contact d'un liquide avec la couche de capteurs (100), comprend au moins deux conducteurs électriques (460, 462), lesquels s'étendent au moins sur certaines sections de manière adjacente l'un à l'autre sur une surface (160) de la couche de capteurs (100).

10. Soupape à membrane (300) selon l'une quelconque des revendications précédentes comprenant un capteur de température (470) pour générer un signal, lequel caractérise une température de la couche de capteurs (100).

11. Soupape à membrane (300) selon l'une quelconque des revendications précédentes, dans laquelle au moins une partie de la pluralité de capteurs (420a-d; 430a-d; 440a-b; 450) est réalisée pour générer le signal (s420a-d; s430a-d; s440a-b; s450) respectif, lequel caractérise une force agissant perpendiculairement sur une section (20a-d; 30a-d; 40a-b; 40b-d; 50) respectivement associée de la couche de capteurs (100).

12. Procédé de fonctionnement de la soupape à membrane (300) selon l'une quelconque des revendications précédentes, comprenant:
la réception (602) de la pluralité de signaux (s420a-d; s430a-d; s440a-b; s450; s490a-b) à partir des capteurs (420a-d; 430a-d; 440a-b; 450; 490a-b) de la couche de capteurs (100); et
la détermination (604) d'un état de la membrane (200) de la soupape à membrane (300) en fonction de la pluralité de signaux (s420a-d; s430a-d; s440a-b; s450; s490a-b).

13. Procédé selon la revendication 12, dans lequel la pluralité de signaux (s420a-d) comprend au moins un groupe de signaux, lesquels proviennent des capteurs (420a-d) disposés dans des sections de tension (20a-d) respectives de la couche de capteurs (100), dans lequel l'état de la membrane (200) comprend un état de serrage (ZK) de la membrane (200) avec des forces agissant perpendiculairement sur les sections de tension (20a-d) respectives, dans lequel le procédé comprend:
la détermination (706) d'une instruction de montage (MA) en fonction de l'état de serrage (ZK).

14. Procédé selon l'une quelconque des revendications 12 ou 13, dans lequel au moins l'un de la pluralité de signaux (s440a-b) provient de capteurs (440a-b) disposés dans la zone de réglage (40) de la couche de capteurs (100), dans lequel l'état de la membrane (200) comprend une pression d'application (D) de la membrane (200) sur un siège de soupape (342) d'un corps de soupape (344); et
le fonctionnement (806) d'un entraînement de soupape (350) en fonction de la pression d'application (D) déterminée.

15. Procédé selon la revendication 12, dans lequel la détermination (604) de l'état de la membrane (200) comprend:
la détermination (902, 904) d'une pression de système (SD1; SD2) d'un fluide de processus en fonction d'un des signaux (s490a-b), lequel provient d'au moins un capteur (490a-b) disposé dans une section de réglage non pertinente pour la pression de réglage (40c-d) de la couche de capteurs (100);
la détermination (906) d'une pression d'application (D) de la membrane (200) en fonction d'un signal (s430a), lequel provient d'au moins un capteur (430a-d) disposé dans une zone de serrage (20) de la couche de capteurs (100);
la détermination (908) d'une différence de pression (delta) en fonction de la pression de système (SD1; SD2) et en fonction de la pression d'application (D); et
la détermination (910) de l'état de la membrane (200) sous la forme d'un manque d'étanchéité vers l'extérieur, lorsque la différence de pression (delta) est inférieure à une valeur seuil (th).

16. Procédé selon la revendication 12, dans lequel la détermination (604) de l'état de la membrane (200) comprend:
la détermination (1002) d'une pression d'application (D) de la membrane (200) sur un siège de soupape (342) d'un corps de soupape (344) en fonction d'un des signaux (s440a-b), lequel provient d'un capteur (440a-b) disposé dans une zone de pression pertinente pour la pression de réglage (40a-b);
la détermination (1004) d'un écart (A) entre une variation réelle dans le temps de la pression d'application (D) déterminée et une variation de consigne dans le temps de la pression d'application (D) ;
la détermination (1006) de l'état de la membrane (200) sous la forme d'un manque d'étanchéité vers l'intérieur lorsque l'écart (A) dépasse une valeur de seuil (th2).
